# EUROPÄISCHE PATENTSCHRIFT

(11) **EP 4 718 325 B1**
(45) Veröffentlichungstag und Bekanntmachung des Hinweises auf die Patenterteilung: **04.11.2026**
(21) Anmeldenummer: 24203752.1
(22) Anmeldetag: 30.09.2024
(51) Int. Cl.: G06N 3/0464, G06N 3/045, G06N 3/084, G01D 5/00, G01P 3/00

(54) **TRAINIEREN EINES SENSORMODELLS**
TRAINING A SENSOR MODEL
ENTRAÎNEMENT D'UN MODÈLE DE CAPTEUR

(43) Veröffentlichungstag der Anmeldung: 01.04.2026
(73) Patentinhaber: SICK AG, 79183 Waldkirch (DE)
(72) Erfinder: Hopp, David, 78166 Donaueschingen (DE)

(56) Entgegenhaltungen:
- EP-A1- 4 202 474
- EP-B1- 3 839 443
- DE-A1- 102021 102 053
- DE-A1- 102022 209 080
- ANONYMOUS: "Generalized additive model - Wikipedia", 9 July 2024 (2024-07-09), XP093342707, Retrieved from the Internet <URL:https://en.wikipedia.org/w/index.php?title=Generalized_additive_model&oldid=1233470390>

## Beschreibung

Die Erfindung betrifft ein Verfahren zum Trainieren eines Sensormodells nach dem Oberbegriff von Anspruch 1.

Ein Sensormodell hat die Funktion, das Verhalten des realen Sensors nachzustellen. Das ermöglicht ein besseres Verständnis des Sensors und seines Zusammenspiels mit anderen Sensoren und sonstigen Geräten vor Ort in der Anwendung. Nach einigen fast vergessenen Versuchen wie Second Life, virtuelle Welten jenseits von Computerspielen zu etablieren, scheint dies derzeit mit dem Nvidia Omniverse eine völlig neue Bedeutung zu gewinnen. Wenn dort eine komplexe Industrielandschaft abgebildet wird, werden digitale Zwillinge aller Komponenten einschließlich der Sensoren benötigt, dies nicht zuletzt zur Gewinnung von Trainingsdaten für ihre realen Pendants.

Ein Sensormodell erhält Eingangsdaten, die sich bei einem realen Sensor aus der Umgebung ergeben und die für ein Sensormodell bereitgestellt werden können, sei es im Rahmen einer virtuellen Umgebung oder durch gezielte Modellierung von Eingangsdaten. Daraus erzeugt es Sensordaten, die bei einem guten Sensormodell mit definierter Genauigkeit denjenigen entsprechen, die ein realer Sensor in der durch die Eingangsdaten repräsentierten Situation erzeugt hätte. Es ist vergleichsweise einfach, ein idealisiertes Sensormodell zu erstellen. Soll das Sensormodell aber realitätsnah arbeiten, so muss es mit unterschiedlichsten Einflüssen zurechtkommen, die hier als Parameter erfasst werden, ohne sie dadurch auf Skalare beschränken zu wollen.

Solche Parameter können unter anderem Einstellungen des Sensors, Sensorvarianten, Umgebungseinflüsse und Toleranzen erfassen. Ein Sensormodell, das mit diesen Parametern umgehen kann, wird je nach nachzubildender Funktion sehr schnell sehr umfangreich und komplex. Es werden häufig mehrere Werkzeuge benötigt, um verschiedene Teile der Gerätefunktion zu modellieren, manchmal ist auch eine individuelle Modellierung erforderlich. Dadurch ergeben sich hohe Anforderungen an die Rechenleistung beziehungsweise, gerade wenn zumindest Teilschritte vorausberechnet werden, sehr große Datenmengen. Dennoch bleiben viele Sensormodelle nur eingeschränkt realitätsnah, da Vereinfachungen getroffen werden müssen und damit oftmals Phänomene oder Details der Gerätefunktion nicht abgebildet sind. Ohnehin bedeutet der Modellcharakter, dass lediglich ein künstliches Abbild geschaffen wird, das bei einem von Hand verfolgten Modellansatz keinen direkten Bezug zu realen Gerätedaten aufweist.

Als möglicher Ausweg können Sensormodelle mit Verfahren des maschinellen Lernens oder künstlicher Intelligenz geschaffen werden, die mit künstlichen oder realen Sensordaten trainiert werden. Unter definierten Rahmenbedingungen kann so das Verhalten eines realen Sensors nachgebildet werden. Das Problem hierbei ist, dass die genannten Parameter zu einer ungeheuren Vielfalt an Szenarien führen. Es ist dann praktisch nicht mehr möglich, Trainingsdaten in ausreichender Qualität und Quantität bereitzustellen, mit denen das Sensormodell das Verhalten des Sensors in der gesamten Kombinatorik der Parameter lernen könnte.

Ein Beispiel eines Sensors, für den ein Bedarf an einem Sensormodell besteht, ist eine Gebervorrichtung. Es werden hier lineare und rotatorische Systeme unterschieden. Ein Lineargeber bestimmt eine Verschiebung auf einer Achse. Ein Drehgeber, Drehwinkelsensor oder Encoder dient dagegen der Erfassung eines Drehwinkels oder einer Winkelstellung beispielsweise einer Welle eines Antriebselements. Dabei wird jeweils eine Maßverkörperung abgetastet, die längs der linearen Achse beziehungsweise an der Welle mitdrehend angebracht ist. Die Maßverkörperung erzeugt über die Relativbewegung eine Intensitätsmodulation in einem Abtastsensor. Oft gibt es mehr als eine abgetastete Codespur. So sind Sin/Cos-Geber verbreitet, die zwei analoge Ausgangssignale mit einem positionsabhängigen sinusförmigen beziehungsweise cosinusförmigen Verlauf zur Verfügung stellen. Die Phase und die Anzahl Perioden dieser Signale repräsentieren jeweils mit einem 90°-Versatz die gesuchte Position.

Für die zugrundeliegenden Sensorprinzipien werden verschiedene Technologien genutzt. Optische Drehgeber verwenden eine Codescheibe mit als Code dienenden Öffnungen oder Reflexmarken, die das Signal eines Lichtsenders modulieren, so dass ein in Transmission oder Reflexion angeordneter Lichtempfänger Positionssignale empfängt. Das Prinzip ist auch auf Lineargeber übertragbar. Bei einem magnetischen Geber wird beispielsweise die Veränderung des Magnetfelds bei Vorbeibewegen von codierenden Permanentmagneten mit einem Hallsensor detektiert. Weitere bekannte Systeme nutzen Maßverkörperungen und Abtastungen, die beispielsweise induktiv, kapazitiv oder nach noch anderen Modulations- und Abtastprinzipien arbeiten. Gebervorrichtungen weisen einige spezifische Abhängigkeiten von Umgebungs- und Geräteeigenschaften auf. Soll ein Sensormodell dies allgemein nachbilden können, darf nicht lediglich von Gebervorrichtungen ausgegangen werden, die unter kontrollierten Umgebungsbedingungen und hochgenau kalibriert und justiert sind. Vielmehr wäre die Anforderung an das Sensormodell, mit solchen Parametern umgehen zu können, aber das ist im Stand der Technik nicht der Fall.

Aus der DE 10 2022 209 080 A1 ist ein Verfahren zum Kalibrieren eines Sensors eines Sensorsystems bekannt, bei dem ein allgemeines Sensormodell bereitgestellt und in einem inneren Optimierungsschritt mittels Messdaten mehrerer baugleicher Sensoren zu sensorspezifischen Sensormodellen angepasst sowie in einem äußeren Optimierungsschritt anhand berechneter Evaluierungsverlustwerte ein allgemeiner Modellparameter des allgemeinen Sensormodells optimiert wird.

Die EP 3 702 850 A1 offenbart ein Verfahren zum Bereitstellen von Betriebsparametern eines Automatisierungsgeräts. Dem lassen sich einige Beispiele für die einleitend erläuterten Parameter entnehmen. Das Dokument beschreibt aber nicht, wie ein Sensormodell diese Parameter berücksichtigen könnte und ist zudem ohne Bezug zu maschinellem Lernen oder künstlicher Intelligenz.

Aus der EP 3 839 443 A1 ist eine Gebervorrichtung bekannt, die aus ihrem Abtastsignal eine kinematische Größe mit einem Verfahren des maschinellen Lernens bestimmt. Die Auswertung ist durch entsprechend breite Trainingsdaten robust gegen gewisse Einflüsse. Dabei wird aber auf die Problematik nicht eingegangen, dass dies einen sehr umfangreichen Trainingsdatensatz erfordert. Außerdem kann das trainiere Verfahren des maschinellen Lernens die Einflüsse in keiner Weise mehr unterscheiden, es handelt sich um eine kompakte, einheitliche Black Box, die Abtastsignale in kinematische Größen übersetzt. Die Parameter, die in den Trainingsdaten womöglich noch unterscheidbar waren, sind in den gelernten Gewichten des Verfahrens des maschinellen Lernens untrennbar mit der Auswertung der Abtastsignale verschmolzen. Es ist daher Aufgabe der Erfindung, einen Weg zu einem Sensormodell zu finden, das mit einer komplexeren Annäherung an die Realität zurechtkommt.

Diese Aufgabe wird durch ein Verfahren zum Trainieren eines Sensormodells nach Anspruch 1 gelöst. Das Sensormodell weist ein Kl-Modell auf, wobei durch den Begriff KI oder künstliche Intelligenz auf die Möglichkeit hingewiesen werden soll, dass es sich um ein aus Daten trainierbares, lernendes Modell handelt, also ein Verfahren des maschinellen Lernens. Als Gegenbegriff wird im Folgenden manchmal ein klassisches Verfahren verwendet, das also auf Rechenvorschriften oder Algorithmen beruht, die von Hand zur Lösung eines bestimmten Problems entworfen sind.

Das Sensormodell wird durch eine erste Vielzahl von Parametern eingestellt. Wie einleitend steht der Begriff Parameter für eine veränderliche Einflussgröße auf das Sensormodell, die häufig ein Skalar ist, aber ebenso als komplexerer Datentyp wie eine Zeitreihe oder ein n-dimensionales Feld ausgelegt sein kann und mit der das Sensormodell an verschiedenste Szenarien anpassbar wird. Das Sensormodell beziehungsweise das Kl-Modell wird mit Trainingsdatensätzen trainiert, die jeweils Eingabedaten bei gegebener Parametrierung, d.h. Zuweisung von je Trainingsdatensatz festen und über die Trainingsdatensätzen variierenden Werten zu den Parametern, und Sensordaten einander zuordnen. Typischerweise ist eine sehr große Zahl von tausenden oder noch viel mehr Trainingsdatensätzen erforderlich.

Das trainierte Sensormodell ist dann parametrierbar, so dass es Sensordaten entsprechend den gesetzten Werten der Parameter erzeugt. Es ist auch, wie unten noch ausgeführt, der umgekehrte Weg denkbar, der dem trainierten Sensormodell Sensordaten zuführt, das dann darauf schließt, mit welchen Werten die Parameter besetzt sind. Es kann erforderlich sein, das Sensormodell speziell entweder für die eine oder die andere Schlussrichtung zu trainieren. Dann können für den einen Weg die Sensordaten und für den umgekehrten Weg die gesetzten Parameter als Label aufgefasst werden, also die beim Training erwartete richtige Vorhersage, aus der sich das Fehlersignal für das Lernen während des Trainings ergibt.

Das Verfahren ist ein computerimplementiertes Verfahren, das in einer beliebigen Recheneinheit ablaufen kann, einschließlich der Recheneinheit eines realen Sensors, einer daran angeschlossenen Recheneinheit, einer nur über die Trainingsdaten oder das Sensormodell, nicht jedoch physisch mit einem Sensor verbundenen Recheneinheit und/oder einer Cloud.

Die Offenbarung zum besseren Verständnis der Erfindung geht von dem Grundgedanken aus, anstelle eines einzigen, monolithischen Kl-Modells für alle Parameter eine zweite Vielzahl von Kl-Modellen mit einem Verfahren des maschinellen Lernens einzusetzen, die jeweils nur für einen Teil der ersten Vielzahl der Parameter zuständig sind. Die erste Vielzahl und zweite Vielzahl sollen lediglich ausdrücken, dass sich die Anzahl der Parameter und der Kl-Modelle voneinander unterscheiden darf. Es ist also möglich, dass ein Kl-Modell für mehrere, aber nicht alle Parameter zuständig ist, umgekehrt kann ein Parameter in mehreren Kl-Modellen eine Rolle spielen.

Die Kl-Modelle werden einzeln mit einer jeweiligen Untermenge der Trainingsdatensätze trainiert, die sich auf die zugehörigen Parameter beziehen. Die übrigen Parameter, für die ein Kl-Modell nicht zuständig ist, bleiben vorzugsweise in dieser Untermenge festgehalten. Das muss nicht streng eingehalten werden, die verbleibende Variation in solchen übrigen Parametern ist dann eine Störgröße, denn gelernt werden soll das Verhalten hinsichtlich der Parameter, für die das Kl-Modell zuständig ist. Es ergibt sich ein modularer Ansatz, in dem die Einflüsse der Parameter nicht insgesamt, sondern einzeln beziehungsweise in Gruppen je Kl-Modell und damit in ihrer Gesamtheit erst über eine Kombination der KI-Modelle gelernt werden.

Die Erfindung hat den Vorteil, dass eine effiziente Erstellung eines Sensormodells ermöglicht wird, die auf realen Sensordaten beruhen kann und somit hochgradig automatisierbar und anhand neuer Messdaten immer wieder anpassbar ist. Durch die Modularität oder Entkopplung von Parametern beziehungsweise Parametergruppen ist ein Training praktisch handhabbar, ohne unrealistische Anforderungen an den Umfang dafür erforderlicher Trainingsdaten. Zugleich ist das modulare Sensormodell übersichtlicher, transparenter und effizienter auch während der Inferenz. Es besteht ferner die Möglichkeit, Module anders zusammenzufügen, um ein Sensormodell mit anderen Parametern zu schaffen, ohne von Grund auf neu anfangen zu müssen, oder um andere, insbesondere ähnliche, aber nicht gleiche Sensoren nachzubilden. Der verbesserte Zugang zur Abhängigkeit des Sensormodells von den Parametern erlaubt nicht zuletzt ein Verständnis oder eine Prüfung von Leistungsanforderungen beispielsweise eines Datenblattes, insbesondere in teilautomatisierter Form wie in der einleitend genannten EP 3 702 850 A1.

Zumindest eines oder einige der Kl-Modelle weisen vorzugsweise ein neuronales Netz oder tiefes neuronales Netz auf. Als tiefes neuronales Netz wird ein künstliches neuronales Netz mit mehreren verborgenen Schichten bezeichnet. Tiefe neuronale Netze sind besonders leistungsfähig und gut trainierbar. Das verbreitetste Verfahren vergleicht eine Vorhersage mit einem vorgegebenen richtigen Ergebnis (Label, Annotation) des jeweiligen Trainingsdatensatzes (supervised learning, überwachtes Lernen). Die Gewichte werden dann um einen gewissen Lernfortschritt in Richtung der Verringerung des Fehlers angepasst (Gradient Descent, Backpropagation). Es ist eine Vielfalt von Architekturen bekannt, beispielsweise Faltungsnetze für Bilddaten (CNN, Convolutional Neural Network) und seit einigen Jahren der Transformer für beinahe alle Anwendungen. Die Erfindung kann von diesen Architekturen und dem weiteren Fortschritt in diesem hochdynamischen Feld profitieren, ohne zunächst auf eine bestimmte Architektur festgelegt zu sein.

Das Sensormodell wird bevorzugt als digitaler Zwilling eingesetzt, das Eingangsdaten aus einem Umgebungsmodell erhält und zugehörige Sensorsignale ausgibt. Dies ist der erste oben schon angesprochene Weg während der Inferenz, in dem das Sensormodell einen Sensor nachbildet. Dank der für jeweilige Parameter oder Parametergruppen zuständigen KI-Modelle kann das Sensormodell in vielfältiger Weise parametriert werden, ohne dadurch die Fähigkeit zu verlieren, Sensordaten entsprechend einem realen Sensor zu erzeugen. Die Eingangsdaten aus dem Umgebungsmodell bilden gleichsam die Umwelt des realen Sensors nach. Das kann sehr einfach sein, etwa indem eine Drehgeschwindigkeit einer Welle vorgegeben wird, woraus ein Sensormodell eines Drehgebers entsprechende Rotationsstellungen als Sensordaten ableitet. Es sind auch komplexe Nachbildungen einer Umgebung, beispielsweise eines ganzen Fahrzeugs oder einer Fabrik- oder Logistikhalle beziehungsweise Teilen davon denkbar. Die Parametrierungen des Sensormodells sorgen dafür, dass entsprechende Einstellungen, Störungen oder sonstigen Einflüsse in den erzeugten Sensordaten des Sensormodells berücksichtigt sind.

Das Sensormodell wird bevorzugt als Diagnosewerkzeug eingesetzt, das Sensorsignale eines realen Sensors erhält und die Einstellung der Parameter des realen Sensors ausgibt. Das ist der inverse oben schon angesprochene Weg während der Inferenz, bei dem aus Sensordaten eines realen Sensors auf dessen Parametrierung geschlossen wird. Damit kann das Verhalten des realen Sensors besser verstanden werden, um ihn möglicherweise neu zu justieren, einzustellen, einen Fehler zu finden oder im Rahmen einer Entwicklung Verbesserungsmöglichkeiten zu identifizieren.

Das Sensormodell weist vorzugsweise ein Teilmodell für einen idealen Sensor bei festen Parametern auf. Für dieses Teilmodell sind demnach die Einflüsse der Parameter herausgenommen. Sie werden beispielsweise auf Null gesetzt, soweit sinnvoll, oder auf einem typischen Wert festgehalten, etwa 20° für einen Temperatur-Parameter. Das Teilmodell kann klassisch sein, denn für einen idealen Sensor sind die Zusammenhänge oft sehr gut verstanden oder sogar bereits modelliert. Es ist aber auch denkbar, dass das Teilmodell selbst ein Kl-Modell ist, das dann aber viel leichter trainiert werden kann, weil die Abhängigkeiten von den Parametern entfallen, vorzugsweise aus Sensordaten eines realen Sensors, der unter Bedingungen arbeitet, die den festgehaltenen Parametern entsprechen.

In den Kl-Modellen wird bevorzugt nur der Einfluss der zugehörigen Parameter trainiert und bestimmt. Damit ist insbesondere das Verhalten eines idealen Sensors bei festen Parametern herausgerechnet. Das Teilmodell entkoppelt die Parameter und die Kernfunktion des modellierten Sensors, die KI-Modelle sind dann fokussiert für die überlagernden Einflüsse der zugehörigen Parameter zuständig.

Die Kl-Modelle sind jeweils für unterschiedliche Parameter und gemeinsam für alle Parameter zuständig, insbesondere für jeden Parameter genau ein eigenes KI-Modell zuständig ist. Die KI-Modelle sind dadurch entkoppelt, dass jeder Parameter nur einem einzigen KI-Modell zugeordnet ist.

Andererseits ist jeder Parameter des Sensormodells mindestens einem KI-Modell zugeordnet, so dass alle durch die Parameter eingeführten Abhängigkeiten von einem KI-Modell abgedeckt sind. Besonders bevorzugt wird aus den Parametern eine Partition gebildet, also Teilmengen, so dass jeder Parameter in genau einer Teilmenge enthalten ist, und es gibt ein Kl-Modell je Teilmenge. Ein Spezialfall davon ist eine besonders bevorzugte 1:1-Zuordnung mit genau einem KI-Modell je einzelnem Parameter. Es ist denkbar, dass mindestens ein Parameter klassisch modelliert wird, es gibt dann neben den KI-Modellen mindestens noch ein klassisches Modell. Dies kann überlappend oder exklusiv erfolgen, d.h. der mindestens eine Parameter des klassischen Modells kann zusätzlich einem KI-Modell zugeordnet sein oder nicht.

Das Sensormodell weist bevorzugt eine Rechenvorschrift und/oder ein Verfahren des maschinellen Lernens auf, um die von den KI-Modellen erzeugten Einflüsse der Parameter zu kombinieren. Die KI-Modelle erzeugen jeweils Teilsignale, in denen sich die Einflüsse der zugehörigen Parameter wiederfinden. Wenn ein Parameter einen Einfluss ohne Querabhängigkeiten zu anderen Parametern einführt, kann dessen Teilsignal einfach auf das Sensorsignal aufaddiert werden. Sofern mehrere Kl-Modelle für denselben Parameter zuständig sind, bedarf es noch einer Verrechnung, also einer Rechenvorschrift wie beispielsweise ein (gewichteter) Mittelwert oder eine sonstige passende Funktion. Das Zusammenspiel der Einflüsse der Parameter verschiedener Kl-Modelle kann aber auch komplex und nichtlinear werden. Soweit die Zusammenhänge hinreichend verstanden sind, ist dann wiederum eine Kombination mit einer Rechenvorschrift möglich. Als Alternative ist denkbar, ein weiteres Verfahren des maschinellen Lernens darauf zu trainieren, die Ergebnisse der Kl-Modelle zu dem Sensorsignal zu kombinieren oder umgekehrt ein Sensorsignal in Teilsignale der Kl-Modelle zu zerlegen. Da der Einfluss der Parameter an sich in den Kl-Modellen schon trainiert ist, werden hierfür sehr viel weniger Trainingsdaten benötigt als im einleitend angesprochenen Fall eines monolithischen Sensormodells, das versucht, alle Parameter zugleich zu berücksichtigen.

Das Sensormodell ist bevorzugt das Sensormodell einer Gebervorrichtung zur Bestimmung einer kinematischen Größe der Bewegung eines ersten Objekts relativ zu einem zweiten Objekt, insbesondere eines Drehgebers oder eines Lineargebers. Dementsprechend stammen bevorzugt die Trainingsdaten von einer realen Gebervorrichtung. Ein Drehgeber oder Encoder misst Drehstellungen oder Ableitungen davon, wie Drehgeschwindigkeit oder Drehbeschleunigung, und wird insbesondere in einem Servomotor als Motorfeedbacksystemen eingesetzt. Ein Lineargeber misst Positionen oder Ableitungen davon in einer Translationsbewegung. Für eine Gebervorrichtung genügt ein einfaches Umgebungsmodell, das lediglich die Drehung oder Verschiebung als Eingangsdaten vorgibt, obwohl natürlich möglich bleibt, dass sich diese Bewegungen aus einem viel komplexeren Umgebungsmodell ergeben.

In einer realen Gebervorrichtung ist eine Maßverkörperung mit dem einen Objekt und eine Abtasteinheit zur Erzeugung mindestens eines Abtastsignals durch Erfassung der in Relativbewegung befindlichen Maßverkörperung mit dem anderen Objekt verbunden. Die Maßverkörperung weist eine Strukturierung oder Codierung auf, die jeweilige Positionen charakterisiert. Dabei sind eine oder mehrere Absolut- und/oder Inkrementalspuren möglich. Mindestens eine Abtasteinheit erzeugt aus der Maßverkörperung mit der Relativbewegung mindestens ein Abtastsignal. Durch Abtasten mehrerer Spuren und/oder Abtastung mit einem Längs- beziehungsweise Winkelversatz entstehen mehrere Abtastsignale. Dazu sind dann mehrere Abtasteinheiten vorgesehen, oder eine Abtasteinheit leistet mehrere oder alle Abtastungen. In dem jeweiligen Abtastsignal schlägt sich die Strukturierung oder Codierung der Maßverkörperung nieder. Das Sensorprinzip der Abtasteinheit und die zugehörigen Eigenschaften der Maßverkörperung kann optisch, magnetisch, induktiv oder kapazitiv sein oder auf noch einer anderen physikalischen Grundlage basieren. Es kommt auf die Ausführungsform des Sensormodells an, inwieweit diese internen Messprinzipien modelliert sind oder nicht. Erforderlich ist zunächst nur, dass das Sensormodell bei Einfangsdaten entsprechend einer zu messenden Dreh- oder Translationsbewegung Sensordaten erzeugt, die mit Sensordaten der realen Gebervorrichtung bei den gesetzten Parametern und in der geforderten Genauigkeit übereinstimmen, oder dass auf dem umgekehrten Weg unter Vorgabe von realen Sensordaten die gesetzten Parameter zurückgegeben werden.

Im Falle eines Sensormodells eines Drehgebers umfassen die Parameter vorzugsweise mindestens einen der folgenden Parameter: Exzentrizität, Höhenschlag und/oder verschiedenen Drehlagerungen. Im Falle von Drehgebern gibt es spezifische Einflussgrößen oder Parameter, von denen die wichtigsten beispielhaft aufgezählt sind. Eine Lagerung ermöglicht die Drehbewegung der beiden Objekte zueinander. Dadurch ergeben sich dann Variationen in Exzentrizität, Höhenschlag und individuellen Eigenschaften der Lagerung selbst, beispielsweise des verwendeten Kugellagers. Indem diese für Drehgeber spezifischen Parameter von den Kl-Modellen erfasst werden, kann der reale Drehgeber deutlich genauer modelliert werden.

Die Parameter umfassen mindestens einen der folgenden Parameter: einen Konfigurationsparameter, wie eine Auflösung eines Sensors, eine Kalibrierung, einen Funktionsmodus, eine Umweltbedingung, wie Temperatur, Feuchtigkeit, Schockbelastung und/oder Vibration, ein Rauschen und/oder eine Positionierung, wie die Pose eines Sensors innerhalb einer Umgebung und/oder die Pose einer Sensorkomponente, insbesondere eines Detektorelements, innerhalb eines Sensors. Über Konfigurationsparameter können von dem Sensormodell verschiedene Varianten, sei sie intrinsisch durch Eigenschaften des Sensoraufbaus oder durch Einstellungen erzeugt, abgedeckt werden. Im Einsatz ist ein realer Sensor verschiedensten Umweltbedingungen ausgesetzt, die durch entsprechende Parameter erfasst werden können. Mit Rauschen ist nicht einfach das Hinzufügen von weißem Rauschen oder dergleichen gemeint, obwohl das an sich in einem zusätzlichen klassischen Teilmodell denkbar wäre, sondern das spezifische Rauschverhalten eines nachgebildeten realen Sensors. Positionen und Orientierungen des Sensors spielen sowohl hinsichtlich der Komponenten innerhalb des Sensors, etwa hinsichtlich Sollpositionen und Toleranzabweichungen, als auch des Sensors insgesamt gegenüber der zu erfassenden Szenerie eine wichtige Rolle.

Die Trainingsdaten werden bevorzugt aus Messungen eines realen Sensors gewonnen. Der reale Sensor oder dessen Typ beziehungsweise Sensorfamilie ist dann das, was das entsprechend trainierte Sensormodell nachbilden kann. Durch die von einem realen Sensor gewonnenen Trainingsdaten entsteht ein besonders wirklichkeitstreues Sensormodell. Der reale Sensor wird besonders bevorzugt in verschiedenster Weise parametriert, so dass sich die Abhängigkeiten von den Parametern in den Trainingsdaten widerspiegeln. Um mehr Trainingsdaten zu erhalten, können Messungen von mehreren baugleichen oder zumindest hinreichend ähnlichen Sensoren verwendet werden. Messungen mit dem reale Sensor können in der Entwicklung, zu einem späteren Zeitpunkt in einem Labor, während der Fertigung und/oder vor Ort im eigentlichen Betrieb durchgeführt werden. Zur Anreicherung der Trainingsdaten können Augmentierung oder synthetische Sensordaten verwendet werden. Das ist aber bevorzugt nicht die einzige Quelle, um hinreichenden Realitätsbezug sicherzustellen.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Drehgebers;
- Fig. 2: eine schematische Darstellung einer Gebervorrichtung zur Längspositionsmessung;
- Fig. 3: eine schematische Übersichtsdarstellung eines modularen Sensormodells mit mehreren KI-Modulen für verschiedene Parameter des Sensormodells;
- Fig. 4: ein schematisches Ablaufdiagramm für das Training der KI-Module;
- Fig. 5: ein schematisches Ablaufdiagramm für eine Inferenz des Sensormodells zur Gewinnung von Sensordaten in Abhängigkeit von einer Parametrierung; und
- Fig. 6: ein schematisches Ablaufdiagramm für eine Inferenz des Sensormodells in einer zu Figur 5 inversen Anwendung zur Gewinnung von gesetzten Parametern in Abhängigkeit von Sensordaten.

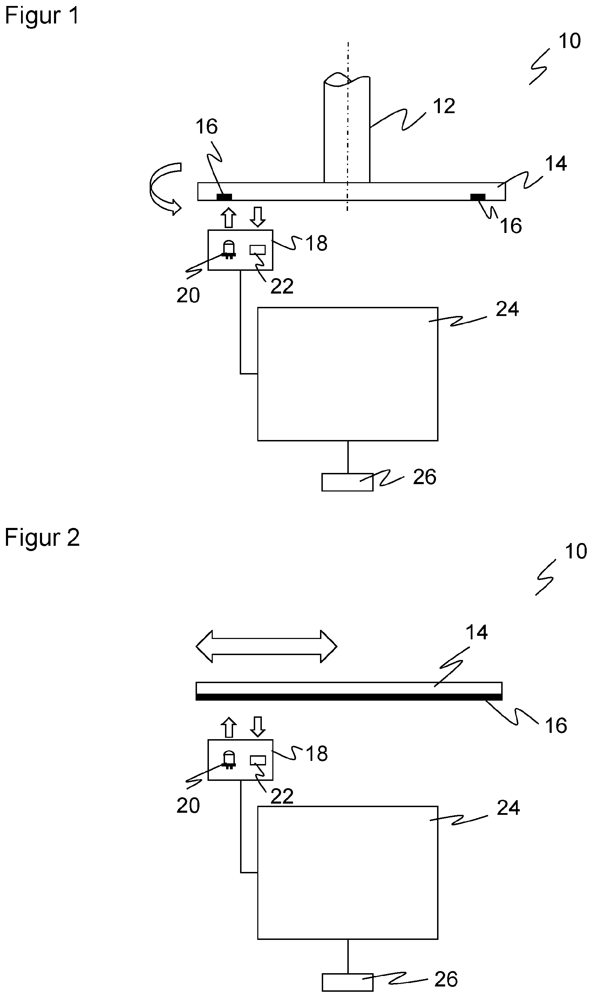

Figur 1 zeigt eine schematische Darstellung einer Gebervorrichtung 10, die als Drehgeber ausgebildet ist. Die Funktion der Gebervorrichtung 10 ist, kinematische Größen der Drehbewegung einer Welle 12 zu bestimmen, insbesondere deren jeweilige Drehstellung. In der dargestellten Ausführungsform als optischer Encoder weist die Gebervorrichtung 10 eine mit der Welle 12 rotierende Codescheibe als Maßverkörperung 14 auf, und auf der Maßverkörperung 14 befindet sich eine Codespur 16. Die Codespur 16 kann sehr einfach sein, wie im Falle eines regelmäßigen inkrementellen Musters oder Zahnrads, oder jeden denkbaren auch sehr komplexen Code enthalten.

Eine Abtasteinheit 18 mit Lichtquelle 20 und Lichtempfänger 22 tastet die Codespur 16 ab und erzeugt ein entsprechendes Abtastsignal. Um eine hohe Messgenauigkeit zu erreichen, sollte das Abtastsignal eine möglichst hohe Auflösung haben und die Unterscheidung vieler Schritte ermöglichen. In der Praxis sind üblicherweise mehrere Abtasteinheiten 18 vorgesehen, die mehrere Codespuren 16 und/oder eine jeweilige Codespur 16 in unterschiedlichem Winkelversatz abtasten. Es ist auch möglich, dass bereits eine Abtasteinheit 18 mehrere Codespuren 16 erfasst, beispielsweise mit einem Lichtempfänger 22 mit mehreren Lichtempfangselementen. Somit können auf unterschiedliche Weise statt nur eines Abtastsignals mehrere Abtastsignale erzeugt werden. Eine mechanische Umdrehung von 360° kann mehrere ähnliche Perioden gleicher oder unterschiedlicher Länge umfassen. Alternativ sind zur besseren Unterscheidbarkeit sektorweise oder über die gesamten 360° keine sich wiederholenden Abschnitte vorgesehen, sei es bereits innerhalb einer einzelnen Codespur oder zumindest in deren Gesamtheit.

Eine Steuer- und Auswertungseinheit 24 bewertet die Abtastsignale, um die gewünschten Winkelsignale und/oder sonstigen kinematischen Größen der Drehbewegung der Welle 12 zu bestimmen. Die Winkelstellung, -geschwindigkeit und/oder -beschleunigung wird an einem Ausgang 26 bereitgestellt. Derartige Ausgangssignale werden als Sensorsignale bezeichnet.

Die Darstellung der Gebervorrichtung 10 in Figur 1 ist sehr schematisch. Unter anderem ist die Ausgestaltung der Abtasteinheit 18 in Figur 1 sehr einfach gehalten, die beispielsweise ebenso im Durchlichtverfahren statt im Auflichtverfahren arbeiten könnte. Ein weiteres alternatives Beispiel ist eine magnetische Maßverkörperung 14 mit einer Abtasteinheit 18, die mindestens einen Hall-Sensor aufweist. Andere physikalische Messprinzipien mit entsprechenden Kombinationen von Maßverkörperung 14 und passender Abtasteinheit 18 sind möglich, insbesondere induktive oder kapazitive Erfassung. In einer Ausführungsform werden mehrere Sensorprinzipien miteinander kombiniert, beispielsweise optische und magnetische Codespuren 16 auf einer oder mehreren Maßverkörperungen 14 mit entsprechenden Abtasteinheiten 18. Es gibt absolute und inkrementale Gebervorrichtungen 10, und die Gebervorrichtung 10 kann beliebige Schnittstellen und Ausgabeformate aufweisen.

Figur 2 zeigt eine schematische Darstellung einer Gebervorrichtung 10, die nun für eine lineare Bewegung statt für eine Drehbewegung ausgebildet ist. Die Maßverkörperung 14 ist in dieser Ausführungsform langgestreckt, und die Abtasteinheit 18 bewegt sich translatorisch in Richtung der Längserstreckung. Damit werden als kinematische Größen eine Längsposition und/oder eine Geschwindigkeit beziehungsweise Beschleunigung in Längsrichtung erfasst. Die Codespur 16 kann eine Periodizität beispielsweise mit Wiederholung nach einem Meter aufweisen oder, zumindest im Zusammenspiel mehrerer Codespuren 16, überall verschieden sein.

Die zur Figur 1 und 2 beschriebenen Gebervorrichtungen 10 sind lediglich bevorzugte Beispiele von Sensoren, die in einer gegebenen Sensorsituation Sensorsignale erzeugen. Ein anderer denkbarer Sensor ist ein optoelektronischer Sensor, insbesondere Lichtschranke, Lichttaster, Lichtgitter, Laserscanner, FMCW-LIDAR oder Kamera, ein Ultraschallsensor, Trägheitssensor, kapazitiver Sensor, magnetischer Sensor, induktiver Sensor, UWB-Sensor oder ein Prozessgrößensensor, insbesondere Temperatur-, Durchfluss-, Füllstand- oder Drucksensor. Diese Aufzählung ist nicht abschließend.

Im Folgenden geht es um ein Sensormodell, das das Verhalten eines Sensors nachbildet, insbesondere einer Gebervorrichtung 10. Für das Sensormodell ist eine Trainings- und eine Betriebs- oder Inferenzphase zu unterscheiden. Training und anschließender Betrieb (Deployment) können dieselbe oder unterschiedliche Hardware nutzen. Als Hardware kommen Recheneinheiten eines Sensors in Betracht, etwa die Steuer- und Auswertungseinheit 24, daran angeschlossene sowie von einem Sensor unabhängige externe Recheneinheiten. Recheneinheiten weisen einen oder mehrere digitale Rechenbausteine auf, wie einen Mikroprozessor oder eine CPU (Central Processing Unit), ein FPGA (Field Programmable Gate Array), einen DSP (Digital Signal Processor), ein ASIC (Application-Specific Integrated Circuit), einen Kl-Prozessor, eine NPU (Neural Processing Unit), eine GPU (Graphics Processing Unit), eine VPU (Video Processing Unit) oder dergleichen. Eine externe Recheneinheit kann ein Computer beliebiger Bauart einschließlich Notebooks, Smartphones, Tablets ebenso sein wie ein lokales Netzwerk, ein Edge-Device oder eine Cloud.

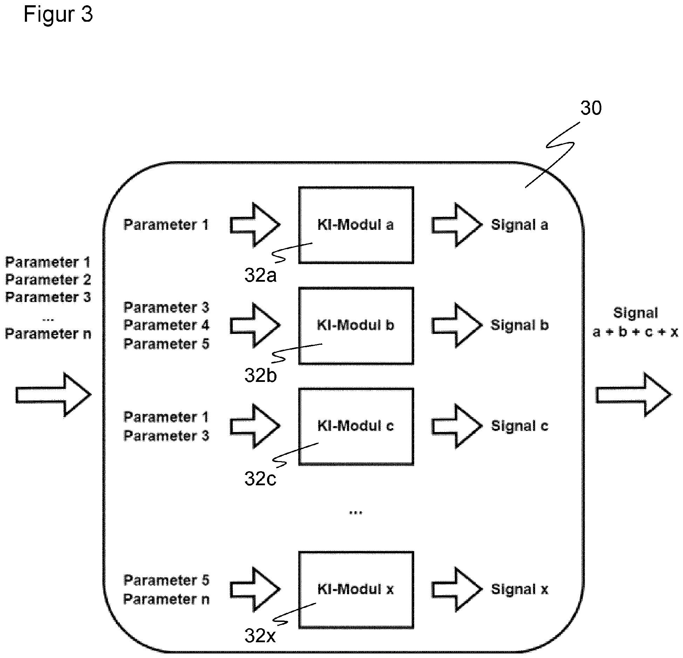

Figur 3 zeigt eine schematische Übersichtsdarstellung eines modularen Sensormodells 30, das einen realen Sensor nachbildet, wobei zuvor Beispiele für nachzubildende Sensoren gegeben wurden. Das Verhalten des Sensors hängt von Einflüssen ab, die hier über die Parameter 1... n erfasst werden. Das ausgegebene Sensorsignal des Sensormodells 30 ist also unterschiedlich, je nachdem, wie die Parameter 1... n gesetzt sind. Parameter können beispielsweise Konfigurationswerte sein, wie Auflösungseinstellungen, Kalibrierparameter oder Funktionsmodi, Werte für Umweltbedingungen, wie Temperatur oder Luftdruck, oder Werte, die die mechanischen Geräte- und Randbedingungen beschreiben, wie Positionen oder Relativpositionen einzelner Gerätekomponenten, Positionierung des Geräts in seiner Umgebung und dergleichen. Zum Eingangssignal des Sensormodells zählt eine Repräsentation der Erfassungssituation. Dies kann über ein Umgebungsmodell eingespeist werden, etwa eine vorgegebene Drehung einer Welle oder eine Bewegung in Richtung einer zu messenden Translation im Falle der Modellierung einer Gebervorrichtung 10. Es wäre denkbar, die Erfassungssituation ebenfalls als einen der Parameter aufzufassen.

Der zu modellierende Sensor kann sehr vielen Einflussfaktoren und somit Parametern ausgesetzt sein, und auch die Parameter selbst können nicht lediglich skalar, sondern mehrdimensional ausfallen. Das Gesamtsystem wird dann sehr schnell äußerst komplex. Ein Drehgeber beispielsweise weist eine messabweichungsbehaftete Positionsausgabe in Abhängigkeit einer mechanischen Eingabeposition auf. Es muss somit im Allgemeinen die Abbildung einer ganzen Wellenumdrehung von 0° bis 360° für das Sensormodell 30 in Betracht gezogen werden. Ein analytisches oder klassisches Sensormodell ist unter diesen Bedingungen nur mit großen Schwierigkeiten erreichbar, je nach Parametern gar nicht mehr, und für noch mächtigere Sensoren erhöhen sich die Schwierigkeiten weiter. Außerdem ist unklar, wie gut der Bezug zwischen einem klassischen Sensormodell und der Realität ist. Deshalb weist das Sensormodell 30 ein Verfahren des maschinellen Lernens auf, so dass es mit realen Sensordaten trainiert werden kann. Das Verfahren des maschinellen Lernens wird hier mit KI für Künstliche Intelligenz bezeichnet, und insbesondere wird ein neuronales Netz eingesetzt, ohne die Erfindung darauf zu beschränken.

Es ist wenig erfolgversprechend, ein einzelnes KI-Modell in einem monolithischen Sensormodell zu verwenden, das sämtliche sich aus der Kombinatorik der Parameter ergebenden Zusammenhänge und Abhängigkeiten korrekt im Sinne der tatsächlichen physikalischen Gegebenheiten einschließlich des Aufbaus und der Verarbeitung innerhalb Sensors erfasst. Dafür wären ein großes Kl-Modell mit vielen Freiheitsgraden und vor allem sehr umfassende, in der Realität nicht zur Verfügung stehende Trainingsdaten erforderlich.

Erfindungsgemäß wird deshalb ein modulare Ansatz verfolgt, in dem Zusammenhänge, Abhängigkeiten und Effekte auf das Sensorsignal einzeln oder in Gruppen separat behandelt werden. In dem Sensormodell 30 sind daher mehrere KI-Module a-x vorgesehen, die jeweils für ein Kl-Modell 32a-x stehen. Die Parameter 1...n, die das Sensormodell 30 als Ganzes beeinflussen, werden aufgeteilt, und jedes Kl-Modell 32a-x ist dann nur für einen Teil der Parameter zuständig. Das bedeutet, dass ein jedes Kl-Modell 32a-x nur im Hinblick auf die Einflüsse der diesem Kl-Modell 32a-x zugeordneten Parameter trainiert wird. Die jeweiligen Trainingsdaten müssen dafür die Variation und Einflüsse der für ein jeweiliges Kl-Modell 32a-x relevanten Parameter widerspiegeln.

Ein Vorteil, der sich aus diesem Vorgehen ergibt, besteht darin, dass bei der Auswahl von geeigneten Parametersätzen für eine konkrete Teilcharakteristik eines jeweiligen Kl-Modells 32a-x vorzugsweise nur diejenigen Parameter Verwendung finden, die einen unmittelbaren oder mittelbaren Einfluss auf das Sensorsignal haben. Dadurch wird bei der Auswahl Vorwissen über die physikalischen und softwaretechnischen Zusammenhänge genutzt. Dieses Vorwissen würde in ein Training eines monolithischen Sensormodells nicht einfließen, und dadurch könnten sich falsche oder unlogische Korrelationen oder Konsequenzen des trainierten Sensormodells ergeben.

Die ausgangsseitigen Teilsignale a-x der Kl-Modelle 32a-x stehen für den Einfluss der jeweiligen Parameter. Die grundsätzliche ideale Sensorfunktion bei festgehaltenen Parametern, also beispielsweise die Übersetzung einer Drehstellung in ideale Sinus- und Cosinussignale eines Drehgebers, kann durch eines oder mehrere der Kl-Modelle 32a-x oder durch ein nicht gezeigtes ideales, klassisches Teilmodell erfasst werden. Alternativ wird diese Sensorfunktion durch mindestens einen der Parameter abgebildet. Die Teilsignale a-x werden in dem Sensormodell 30 zu dem Sensorsignal zusammengefasst. In der Figur 3 ist das als einfache Addition dargestellt. Das funktioniert insbesondere dann, wenn die Parameter der KI-Modelle 32a-x nichtüberlappend zugeordnet sind, was aber nicht zwingend gefordert ist. In einigen Fällen ist daher das Zusammenspiel komplexer, so dass dann eine andere Rechenvorschrift verwendet wird. Es ist auch denkbar, dieses Zusammenführen zu trainieren und dafür ein nicht dargestelltes, den Kl-Modellen 32a-x nachgeordnetes weiteres Kl-Modell zu verwenden. Das ergibt dann insgesamt ein zweistufiges Training: Zunächst der Teilcharakteristika separat in den Parametern der jeweiligen KI-Modelle 32a-x und dann im zweiten Schritt zusammenführend in dem weiteren Kl-Modell für die Kombination der Teilsignale a-x zu dem Sensorsignal.

Die KI-Modelle 32a-x müssen untereinander nicht das gleiche Verfahren des maschinellen Lernens verwenden, vorteilhafterweise ist das aber der Fall. Wenn es sich beispielsweise jeweils um neuronale Netze handelt, so sind diese hinsichtlich ihrer Architektur immer noch variabel. Je nach Parameter können hier Unterschiede zwischen den KI-Modellen 32a-x von Vorteil sein. Grundsätzlich wird durch die Modularität erreicht, dass sich die Kl-Modelle 32a-x sehr effizient trainieren lassen und während der Inferenz mit geringen Rechenkapazitäten auskommen, so dass sie auch in weniger leistungsstarken Recheneinheiten eingesetzt werden können, beispielsweise einer webbasierten Oberfläche oder in der Hardware eines Sensors. Außerdem können Kl-Modelle 32a-x wiederverwendet und gleichsam zu Sensormodellen anderer Sensoren zusammengesteckt werden oder Sensormodellen anderer Sensoren die Variabilität hinsichtlich ihrer zugeordneten Parameter hinzufügen.

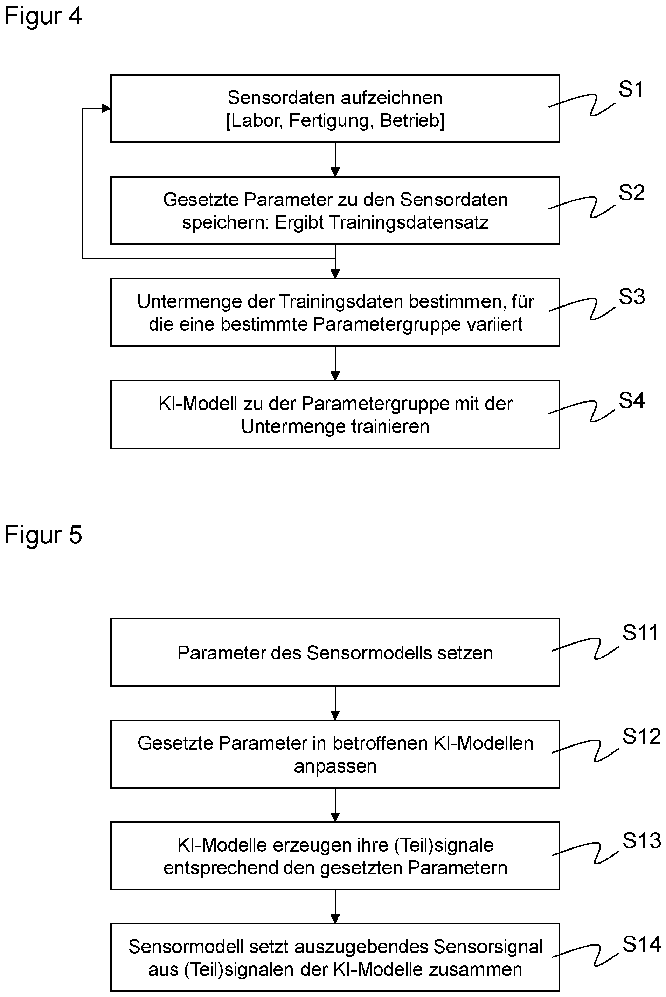

Figur 4 zeigt ein schematisches Ablaufdiagramm für das Training der KI-Module 32a-x. In einem Schritt S1 werden zunächst Sensordaten eines realen Sensors aufgezeichnet und beispielsweise in einer Datenbank abgelegt oder in anderer Form gespeichert. Die Gewinnung von Sensordaten kann im Labor, sei es in der Entwicklung, zu Testzwecken oder explizit zum Generieren von Trainingsdaten, in der Fertigung oder auch vor Ort im Betrieb des Sensors erfolgen.

In einem Schritt S2 werden die Parameter zu jeweiligen Sensordaten gespeichert, wobei hier die Eingabewerte, also beispielsweise eine jeweilige tatsächliche Drehstellung oder Position im Falle einer Gebervorrichtung 10, vereinfachend zu den Parametern gezählt sind. Jedenfalls besteht in dem entstehenden Trainingsdatensatz eine klare Zuordnung zwischen Eingabewerten, Parametrierung und Sensordaten, damit dieser Zusammenhang später gelernt werden kann.

Das Sammeln von Trainingsdatensätzen wird fortgesetzt beziehungsweise wiederholt, bis eine ausreichende Menge von Trainingsbeispielen erreicht ist. In einem Schritt S3 werden nun für ein jeweiliges zu trainierendes Kl-Modell 32a-x Trainingsdatensätze herausgesucht, in denen die zu dem KI-Modell 32a-x gehörigen Parameter variiert und die übrigen Parameter soweit möglich festgehalten sind. Es ist denkbar, die Trainingsdaten entsprechend aufzubereiten, etwa durch Filter, Funktionsfit oder Frequenzanalysen, um Einflüsse bestimmter Parameter aufzuschärfen oder abzuschwächen.

In einem Schritt S4 wird ein jeweiliges Kl-Modell 32a-x mit der Untermenge der Trainingsdaten trainiert, die im Schritt S3 herausgesucht wurden. Nach dem Training hat das KI-Modell 32a-x in den Einfluss der ihm zugeordneten Parameter gelernt.

Optional und ohne Darstellung folgt auf das Training der einzelnen Kl-Modelle 32a-x noch ein Training des oben schon angesprochenen denkbaren nachgelagerten weiteren Kl-Modells, um die Teilsignale der KI-Modelle 32a-x zu einem Sensorsignal zu kombinieren.

Figur 5 zeigt ein schematisches Ablaufdiagramm für eine Inferenz des Sensormodells 30 zur Gewinnung von Sensordaten in Abhängigkeit von einer Parametrierung. Das trainierte Sensormodell 30 wird somit genutzt, um Sensordaten in Nachbildung des realen Sensors zu erzeugen.

In einem Schritt S11 werden Parameter des Sensormodells 30 gesetzt. Dies betrifft zunächst das Sensormodell 30 als Ganzes, entsprechend der linken Seite von Figur 3. Die Logik der weiteren Schritte der Figur 5 lässt sich weiter von links nach rechts in Figur 3 nachvollziehen. In einem Schritt S12 werden die gewünschten Werte der Parameter an die betroffenen Kl-Modelle 32a-x weitergegeben. Das Sensormodell 30 ist nun parametriert. In einem Schritt S13 erzeugen erst einmal die Kl-Modelle 32a-x ihre Teilsignale entsprechend der gesetzten Parameter. In einem Schritt S14 werden diese Teilsignale zu dem Sensorsignal kombiniert.

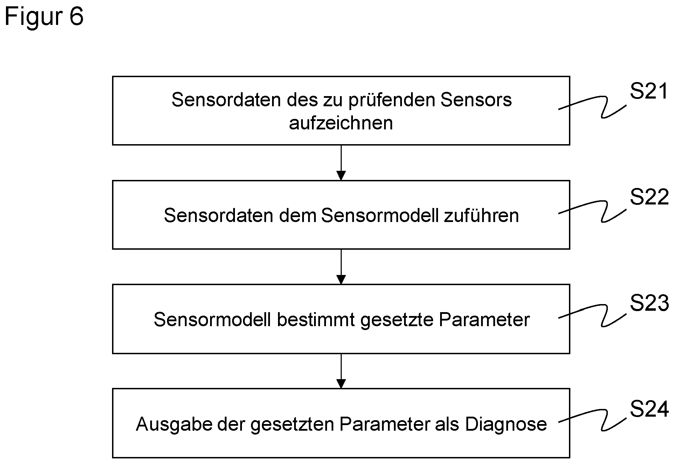

Figur 6 zeigt ein schematisches Ablaufdiagramm für eine Inferenz des Sensormodells 30 in einer zu Figur 5 inversen Anwendung zur Gewinnung von gesetzten Parametern in Abhängigkeit von Sensordaten. Dies dient insbesondere der Diagnose eines realen Sensors. Die Logik fließt nun, anschaulich gesprochen, in umgekehrter Richtung der Figur 3 von rechts nach links. Es wird meist erforderlich sein, das Sensormodell 30 beziehungsweise dessen Kl-Modelle 32a-x eigens für diese inverse Richtung zu trainieren. Das Sensormodell 30 kann dann nur entweder für die Anwendung in der einen Richtung gemäß Figur 5 oder in der anderen Richtung gemäß Figur 6 eingesetzt werden. Grundsätzlich wäre auch ein bidirektional funktionsfähiges Sensormodell 30 vorstellbar. Die gemäß Figur 4 gewonnenen Trainingsdaten jedenfalls können für beide Richtungen verwendet werden, es findet lediglich ein Wechsel der Rollen von Eingabedaten und Label statt, es bilden also einmal die Sensordaten und einmal die Parameter die Vorgabe der "richtigen" Lösung zur Erzeugung eines Fehlersignals während des Trainings.

In einem Schritt S21 werden Sensordaten des zu prüfenden Sensors aufgezeichnet und diese in einem Schritt S33 dem Sensormodell 30 zugeführt. Das Sensormodell 30 bestimmt dann in einem Schritt S23 die gesetzten Parameter. Dies erfolgt wiederum modular, d.h. das Sensorsignal wird auf Teilsignale heruntergebrochen, und ein jeweiliges Kl-Modell 32a-x findet aus dem ihm zugeordneten Teilsignal die gesetzten Parameter, für die es zuständig ist. In einem Schritt S24 werden diese Parameter als Ergebnis für eine Diagnose ausgegeben. Sofern Kl-Modelle 32a-x überlappend für Parameter zuständig sind, kann hier noch eine Verrechnung stattfinden, beispielsweise Bilden eines (gewichteten) Mittelwerts.

In einem ersten Beispiel wird ein Sensormodell 30 eines Drehgebers betrachtet. Ein relevanter Parameter in diesem Zusammenhang ist die Exzentrizität der Maßverkörperung, die eine sinusförmige systematische Messabweichung über eine Umdrehung der Gerätewelle verursacht. Dieser Fehleranteil kann aus der gemessenen Position des Drehgebers extrahiert und zusammen mit dem Parameter Exzentrizität, beispielsweise in der Endfertigung bestimmt, zum Training eines Kl-Modells 32a-x verwendet werden. Werden hinreichend viele Trainingsbeispiele mit verschiedenen Exzentrizitäten gegeben, dann lernt das Kl-Modell 32a-x den Zusammenhang zwischen der Exzentrizität und der resultierenden Messabweichung über eine Umdrehung und ist somit in der Lage, die entsprechende Messabweichung bei Vorgabe einer Exzentrizität als Teilsignal zu erzeugen. Das Teilsignal kann in diesem Fall einfach dem eigentlichen Sensorsignal, d.h. beispielsweise der Winkelstellung, hinzugefügt werden.

In einem zweiten Beispiel wird ein Rauschen betrachte, dem die Sensorsignale unterliegen. Es liegen Parameter vor, die das Rauschen beeinflussen, etwa Filtereinstellungen, Temperatur oder dergleichen. Das für diese Parameter zuständige Kl-Modell 32a-x lernt die Rauschcharakteristik in Abhängigkeit von diesen Parametern. Entsprechendes Rauschen wird als Teilsignal dem Sensorsignal additiv hinzugefügt.

Während die ersten beiden Beispiele wie in Figur 5 den Weg von einer Parametrierung zu einem Sensorsignal beschreiben, wird in dem nun folgenden dritten Beispiel der umgekehrte Weg gemäß Figur 6 gewählt. Der Parameter in diesem dritten Beispiel ist die Position eines Detektorelements innerhalb eines Sensors. In den Trainingsdaten ist diese Position beispielsweise aus einer Labormessreihe für verschiedene Sensoren samt damit aufgezeichneten Sensordaten bekannt. Das Kl-Modell 32a-x lernt daraus den Zusammenhang zwischen Sensordaten und Detektorposition in dieser inversen Richtung. Beispielsweise zur Prüfung in der Endfertigung kann nun mittels des Sensormodells 30 die Position des Detektorelements aus den Sensordaten bestimmt werden. Ganz analog ist auch eine in-situ-Diagnose nach Montage am Betriebsort möglich.

Wie schon erwähnt, können KI-Modelle 32a-x mit klassischen Teilmodellen gemischt werden. Komplexere Zusammenhänge lassen sich jedoch mit Kl-Modellen 32a-x einfacher und detaillierter abbilden, und es ist dafür kein tieferes Verständnis des Sensorprinzips und der oft sehr unübersichtlichen physikalischen Zusammenhänge der Beeinflussung durch die Parameter erforderlich. Das Training ist sehr weitgehend automatisierbar. Ein weiterer Vorteil der KI-Modelle 32a-x liegt darin, dass sie immer wieder nachtrainiert werden können, sobald neue Messdaten vorliegen. Dadurch wird ein Sensormodell 30 dynamisch optimierbar und an Veränderungen am Sensor anpassbar. Bei tiefgreifenderen Veränderungen sind oft zumindest einige Kl-Modelle 32a-x wiederverwendbar, ein neues Sensormodell 30 kann so sukzessive aufgebaut und erweitert werden.

Die Trainingsdaten werden vorzugsweise aus Messungen realer Sensoren gewonnen. Prinzipiell sind auch synthetische Trainingsdaten vorstellbar, die aber hier vorzugsweise allenfalls ergänzend herangezogen werden, um eine korrekte Abbildung der Realität sicherzustellen. Die Grundlage von synthetischen Trainingsdaten können klassische Sensormodelle oder Vorgängermodelle sein. Damit lässt sich ein Training zumindest anfangen, oder ein für sich noch zu spärlicher Trainingsdatensatz wird angereichert.

## Patentansprüche

1. Computerimplementiertes Verfahren zum Trainieren eines Sensormodells (30), das ein Kl-Modell (32a-x) mit einem Verfahren des maschinellen Lernens aufweist, wobei das Sensormodell (30) durch eine erste Vielzahl von Parametern einstellbar ist, wobei der Begriff Parameter für eine veränderliche Einflussgröße auf das Sensormodell steht und das Sensormodell (30) mit Trainingsdatensätzen trainiert wird, die jeweils Eingangsdaten bei einer bestimmten Einstellung der Parameter und dabei erzeugte Sensorsignale einander zuordnen, so dass das trainierte Sensormodell (30) in der Lage ist, zu vorgegebenen Eingangsdaten bei einer bestimmten Einstellung der Parameter zugehörige Sensorsignale auszugeben und/oder umgekehrt zu vorgegebenen Sensorsignalen die Einstellung der Parameter auszugeben,
wobei das Sensormodell eine zweite Vielzahl von Kl-Modellen (32a-x) mit einem Verfahren des maschinellen Lernens aufweist, die jeweils für unterschiedliche Parameter und gemeinsam für alle Parameter zuständig sind, wobei die Parameter Einstellungen des Sensors, Konfigurationswerte wie Auflösungseinstellungen oder Kalibrierparameter, Funktionsmodi, Sensorvariationen, Umgebungseinflüsse wie Temperatur oder Luftdruck, Toleranzen und/oder Werte sind, die die mechanischen Geräte- und Randbedingungen beschreiben, wie Positionen oder Relativpositionen einzelner Gerätekomponenten, Positionierung des Geräts in seiner Umgebung und dass die Kl-Modelle (32a-x) jeweils mit einem Teil der Trainingsdatensätze mit Eingangsdaten bei einer variierten Einstellung des zugehörigen Teils der ersten Vielzahl von Parametern trainiert werden, so dass die Einflüsse der Parameter modular über die Kl-Modelle (32a-x) verteilt trainiert und in dem Sensormodell (30) kombiniert werden, und dass zum Ausgeben eines Sensorsignals bei einer bestimmten Einstellung der Parameter die KI-Modelle (32a-x) Teilsignale entsprechend der gesetzten Parameter erzeugen und die Teilsignale zu dem Sensorsignal kombiniert werden und/oder umgekehrt zum Ausgeben der Einstellung der Parameter zu einem vorgegebenen Sensorsignal das Sensorsignal auf Teilsignale heruntergebrochen wird und die Kl-Modell (32a-x) aus dem ihm zugeordneten Teilsignal die gesetzten Parameter findet, für die es zuständig ist.

2. Verfahren nach Anspruch 1,
wobei zumindest eines der Kl-Modelle (32a-x) ein neuronales Netz aufweist.

3. Verfahren nach Anspruch 1 oder 2,
wobei das Sensormodell (30) als digitaler Zwilling eingesetzt wird, das Eingangsdaten aus einem Umgebungsmodell erhält und zugehörige Sensorsignale ausgibt.

4. Verfahren nach einem der vorhergehenden Ansprüche,
wobei das Sensormodell (30) als Diagnosewerkzeug eingesetzt wird, das Sensorsignale eines realen Sensors erhält und die Einstellung der Parameter des realen Sensors ausgibt.

5. Verfahren nach einem der vorhergehenden Ansprüche,
wobei das Sensormodell (30) ein Teilmodell für einen Sensor bei auf Null gesetzten oder einem typischen Wert festgehaltenen Parametern aufweist, so dass für das Teilmodell die Einflüsse der Parameter herausgenommen sind.

6. Verfahren nach Anspruch 5,
wobei in den Kl-Modellen (32a-x) nur der Einfluss der zugehörigen Parameter trainiert und bestimmt wird.

7. Verfahren nach einem der vorhergehenden Ansprüche,
wobei für jeden Parameter genau ein eigenes KI-Modell (32a-x) zuständig ist.

8. Verfahren nach einem der vorhergehenden Ansprüche,
wobei das Sensormodell (30) eine Rechenvorschrift und/oder ein Verfahren des maschinellen Lernens aufweist, um die von den Kl-Modellen (32a-x) erzeugten Einflüsse der Parameter zu kombinieren.

9. Verfahren nach einem der vorhergehenden Ansprüche,
wobei das Sensormodell (30) das Sensormodell (30) einer Gebervorrichtung (10) zur Bestimmung einer kinematischen Größe der Bewegung eines ersten Objekts relativ zu einem zweiten Objekt ist, insbesondere eines Drehgebers oder eines Lineargebers.

10. Verfahren nach Anspruch 9,
wobei das Sensormodell (30) das Sensormodell (30) eines Drehgebers ist und die Parameter mindestens einen der folgenden Parameter umfassen: Exzentrizität, Höhenschlag und/oder verschiedenen Drehlagerungen.

11. Verfahren nach einem der vorhergehenden Ansprüche,
wobei die Parameter mindestens einen der folgenden Parameter umfassen: einen Konfigurationsparameter, wie eine Auflösung eines Sensors, eine Kalibrierung, einen Funktionsmodus, eine Umweltbedingung, wie Temperatur, Feuchtigkeit, Schockbelastung und/oder Vibration, ein Rauschen und/oder eine Positionierung, wie die Pose eines Sensors innerhalb einer Umgebung und/oder die Pose einer Sensorkomponente, insbesondere eines Detektorelements, innerhalb eines Sensors.

12. Verfahren nach einem der vorhergehenden Ansprüche,
wobei die Trainingsdaten aus Messungen eines realen Sensors gewonnen werden, insbesondere während der Entwicklung, aus Labormessungen, während der Fertigung und/oder während des Betriebs.

## Claims

1. Computer-implemented method for training a sensor model (30) comprising an AI model (32a-x) using a machine-learning method, wherein the sensor model (30) is configurable by a first plurality of parameters, the term parameter denoting a variable influence on the sensor model, and the sensor model (30) is trained with training datasets which respectively associate input data at a specific setting of the parameters with sensor signals generated thereby, such that the trained sensor model (30) is capable of outputting corresponding sensor signals for predetermined input data at a specific setting of the parameters and/or, conversely, outputting the setting of the parameters for predetermined sensor signals, **characterised in that** the sensor model comprises a second plurality of AI models (32a-x) using a machine-learning method, which are respectively responsible for different parameters and jointly for all parameters, wherein the parameters are settings of the sensor, configuration values such as resolution settings or calibration parameters, operating modes, sensor variations, environmental influences such as temperature or air pressure, tolerances and/or values describing the mechanical device and boundary conditions, such as positions or relative positions of individual device components and positioning of the device within its environment, and wherein the AI models (32a-x) are each trained with a portion of the training datasets with input data at a varied setting of the associated portion of the first plurality of parameters, such that the influences of the parameters are trained in a modular manner via the AI models (32a-x) and combined in the sensor model (30), and wherein, for outputting a sensor signal at a specific setting of the parameters, the AI models (32a-x) generate partial signals according to the set parameters and the partial signals are combined into the sensor signal and/or, conversely, for outputting the setting of the parameters in response to a predetermined sensor signal, the sensor signal is broken down into partial signals and the AI model (32a-x) determines from the partial signal assigned thereto the set parameters for which it is responsible.

2. Method according to claim 1, wherein at least one of the AI models (32ax) comprises a neural network.

3. Method according to claim 1 or 2, wherein the sensor model (30) is used as a digital twin that receives input data from an environment model and outputs corresponding sensor signals.

4. Method according to one of the preceding claims, wherein the sensor model (30) is used as a diagnostic tool that receives sensor signals of a real sensor and outputs the setting of the parameters of the real sensor.

5. Method according to one of the preceding claims, wherein the sensor model (30) comprises a sub-model for a sensor with parameters set to zero or held at a typical value, such that the influences of the parameters are removed for the sub-model.

6. Method according to claim 5, wherein only the influence of the associated parameters is trained and determined in the AI models (32a-x).

7. Method according to one of the preceding claims, wherein exactly one dedicated AI model (32a-x) is responsible for each parameter.

8. Method according to one of the preceding claims, wherein the sensor model (30) comprises a computational rule and/or a machine-learning method for combining the influences of the parameters generated by the AI models (32a-x).

9. Method according to one of the preceding claims, wherein the sensor model (30) is the sensor model (30) of an encoder device (10) for determining a kinematic variable of the movement of a first object relative to a second object, in particular a rotary encoder or a linear encoder.

10. Method according to claim 9, wherein the sensor model (30) is the sensor model (30) of a rotary encoder and the parameters comprise at least one of the following parameters: eccentricity, axial runout and/or different rotary bearings.

11. Method according to one of the preceding claims, wherein the parameters comprise at least one of the following parameters: a configuration parameter such as a sensor resolution, a calibration, an operating mode, an environmental condition such as temperature, humidity, shock load and/or vibration, noise and/or positioning such as the pose of a sensor within an environment and/or the pose of a sensor component, in particular a detector element, within a sensor.

12. Method according to one of the preceding claims, wherein the training data are obtained from measurements of a real sensor, in particular during development, from laboratory measurements, during manufacture and/or during operation.

## Revendications

1. Procédé mis en œuvre par ordinateur pour entraîner un modèle de capteur (30), qui comprend un modèle d'IA (32a-x) mettant en œuvre un procédé d'apprentissage automatique, le modèle de capteur (30) étant réglable au moyen d'une première pluralité de paramètres, le terme paramètre désignant une grandeur d'influence variable sur le modèle de capteur, et le modèle de capteur (30) étant entraîné à l'aide de jeux de données d'entraînement qui associent respectivement des données d'entrée, pour un réglage déterminé des paramètres, à des signaux de capteur générés dans ce cadre, de sorte que le modèle de capteur entraîné (30) est capable de délivrer des signaux de capteur correspondants pour des données d'entrée prédéfinies avec un réglage déterminé des paramètres et/ou, inversement, de délivrer le réglage des paramètres pour des signaux de capteur prédéfinis,
dans lequel
le modèle de capteur comprend une deuxième pluralité de modèles d'IA (32a-x) mettant en œuvre un procédé d'apprentissage automatique, lesquels sont respectivement responsables de différents paramètres et conjointement de tous les paramètres, les paramètres étant des réglages du capteur, des valeurs de configuration telles que des réglages de résolution ou des paramètres d'étalonnage, des modes de fonctionnement, des variations de capteur, des influences environnementales telles que la température ou la pression d'air, des tolérances et/ou des valeurs décrivant les conditions mécaniques du dispositif et les conditions aux limites, telles que les positions ou positions relatives de composants individuels du dispositif, le positionnement du dispositif dans son environnement, et en ce que les modèles d'IA (32a-x) sont respectivement entraînés à l'aide d'une partie des jeux de données d'entraînement comportant des données d'entrée avec un réglage varié de la partie associée de la première pluralité de paramètres, de sorte que les influences des paramètres sont entraînées de manière modulaire, réparties entre les modèles d'IA (32a-x) et combinées dans le modèle de capteur (30), et en ce que, pour délivrer un signal de capteur avec un réglage déterminé des paramètres, les modèles d'IA (32a-x) génèrent des signaux partiels conformément aux paramètres définis et les signaux partiels sont combinés pour former le signal de capteur et/ou, inversement, pour délivrer le réglage des paramètres pour un signal de capteur prédéfini, le signal de capteur est décomposé en signaux partiels et le modèle d'IA (32a-x) détermine, à partir du signal partiel qui lui est attribué, les paramètres définis dont il est responsable.

2. Procédé selon la revendication 1,
dans lequel au moins un des modèles d'IA (32a-x) comprend un réseau neuronal.

3. Procédé selon la revendication 1 ou 2, dans lequel le modèle de capteur (30) est utilisé comme jumeau numérique recevant des données d'entrée provenant d'un modèle d'environnement et délivrant des signaux de capteur correspondants.

4. Procédé selon l'une des revendications précédentes,
dans lequel le modèle de capteur (30) est utilisé comme outil de diagnostic qui reçoit des signaux de capteur d'un capteur réel et délivre le réglage des paramètres du capteur réel.

5. Procédé selon l'une des revendications précédentes,
dans lequel le modèle de capteur (30) comprend un sous-modèle pour un capteur dont les paramètres sont fixés à zéro ou maintenus à une valeur typique, de sorte que les influences des paramètres sont supprimées pour le sous-modèle.

6. Procédé selon la revendication 5,
dans lequel seul l'effet des paramètres associés est entraîné et déterminé dans les modèles d'IA (32a-x).

7. Procédé selon l'une des revendications précédentes,
dans lequel exactement un propre modèle d'IA (32a-x) est responsable de chaque paramètre.

8. Procédé selon l'une des revendications précédentes,
dans lequel le modèle de capteur (30) comprend une règle de calcul et/ou un procédé d'apprentissage automatique afin de combiner les influences des paramètres générées par les modèles d'IA (32a-x).

9. Procédé selon l'une des revendications précédentes,
dans lequel le modèle de capteur (30) est le modèle de capteur (30) d'un dispositif codeur (10) destiné à déterminer une grandeur cinématique du mouvement d'un premier objet par rapport à un deuxième objet, en particulier d'un codeur rotatif ou d'un codeur linéaire.

10. Procédé selon la revendication 9,
dans lequel le modèle de capteur (30) est le modèle de capteur (30) d'un codeur rotatif et les paramètres comprennent au moins l'un des paramètres suivants : excentricité, battement axial et/ou différents paliers rotatifs.

11. Procédé selon l'une des revendications précédentes,
dans lequel les paramètres comprennent au moins l'un des paramètres suivants : un paramètre de configuration, tel qu'une résolution d'un capteur, un étalonnage, un mode de fonctionnement, une condition d'environnement telle que la température, l'humidité, une sollicitation par choc et/ou une vibration, un bruit et/ou un positionnement, tel que la pose d'un capteur dans un environnement et/ou la pose d'un composant de capteur, en particulier d'un élément détecteur, à l'intérieur d'un capteur.

12. Procédé selon l'une des revendications précédentes,
dans lequel les données d'entraînement sont obtenues à partir de mesures d'un capteur réel, en particulier au cours du développement, à partir de mesures de laboratoire, au cours de la fabrication et/ou au cours du fonctionnement.
